# EUROPÄISCHE PATENTSCHRIFT

(11) **EP 0 667 258 B1**
(45) Veröffentlichungstag und Bekanntmachung des Hinweises auf die Patenterteilung: **07.05.1997**
(21) Anmeldenummer: 94119640.4
(22) Anmeldetag: 13.12.1994
(51) Int. Cl.: B60N 3/10

(54) **Vorrichtung zum Halten von Getränkebehältern, Trinkgefässen oder dgl.**
Device for holding drink containers
Dispositif pour tenir des récipients de boissons

(30) Priorität: 09.02.1994 DE 4404078
(43) Veröffentlichungstag der Anmeldung: 16.08.1995
(73) Patentinhaber: fischerwerke Artur Fischer GmbH & Co. KG, D-72178 Waldachtal (DE)
(72) Erfinder: Plocher, Bernd, Dipl.-Ing. (FH), D-72108 Rottenburg (DE)

(56) Entgegenhaltungen:
- EP-A- 0 447 263
- DE-U- 9 214 133
- US-A- 2 778 702
- US-A- 4 733 908
- PATENT ABSTRACTS OF JAPAN vol. 014 no. 478 (M-1036) ,18.Oktober 1990 & JP-A-02 193731 (NIFCO INC) 31.Juli 1990,
- PATENT ABSTRACTS OF JAPAN vol. 016 no. 569 (M-1343) ,9.Dezember 1992 & JP-A-04 221235 (NISSAN MOTOR CO LTD) 11.August 1992,

## Beschreibung

Die Erfindung betrifft eine Vorrichtung gemäß dem Oberbegriff des Hauptanspruchs.

Es sind eine Vielzahl von Vorrichtungen zum Halten von Behältnissen insbesondere in einem Kraftfahrzeug bekannt. Dabei steht das Behältnis auf einer Auflagefläche, die entweder fest oder herausklappbar angeordnet ist, und ein Haltering oder dergleichen fixiert das Behältnis seitlich. Mitunter kann der Durchmesser des Halterings auf die Größe des Behältnisses angepaßt werden.

Aus der Veröffentlichung US 5,072,909 A1 ist ein anpaßbarer Dosenhalter bekannt, der in einem Kraftfahrzeug an geeigneter Stelle anbringbar ist. Der Dosenhalter weist ein herausklappbares und zwei Arme aufweisendes Halteteil auf, wobei der Abstand der Arme entsprechend der Größe des Behältnisses variiert werden kann. Unterhalb des Halteteils befindet sich ein ebenfalls herausklappbares Bodenteil auf dem die Dose steht. Wenn der Dosenhalter nicht benutzt wird, kann das Halteteil und das Bodenteil eingeklappt werden, so daß der Dosenhalter als flaches Teil wenig störend im Kraftfahrzeug aufbewahrt werden kann. Da es sich bei der beschriebenen Vorrichtung nicht um eine Vorrichtung handelt, die fest in einem Ablagefach eines Kraftfahrzeuges untergebracht wird, sondern an einer dafür im Kraftfahrzeug geeigneten Stelle, benötigt sie aufgrund ihrer gesamten Bauhöhe, die durch den Durchmesser des ringähnlichen Halteteils bestimmt wird, in der Höhe relativ viel Platz.

Aus der DE 40 22 193 A1 ist eine Vorrichtung zum Halten eines Getränkebehälters oder dergleichen, insbesondere in einem Kraftfahrzeug bekannt, die an einer Mittelkonsole angelenkt ist. Die Haltevorrichtung besteht aus einem einen Getränkebehälter aufnehmenden ringförmigen Halteteil und einem Schwenkbügel, die um eine erste Schwenkachse verschwenkbar sind. Dabei ist der Schwenkbügel an einem Schwenkarm schwenkbar gelagert, der seinerseits an einem Aufnahmeteil angelenkt ist. Die Haltevorrichtung ist aus einer Wirkstellung außerhalb eines Ablagefaches in eine Ruhestellung innerhalb eines Ablagefaches verschwenkbar. Der Getränkebehälter stützt sich mit seiner Unterseite auf dem Rand des Ablagefaches auf. Das Ablagefach dient im wesentlichen nur der Aufbewahrung der Vorrichtung.

Aus der EP 0 447 263 A2 ist eine herausziehbare Vorrichtung bekannt, die ähnlich einer Musikkassette, aus einem Spalt herausbewegt und aufgeklappt werden kann. Dazu besteht die Vorrichtung aus gelenkig miteinander verbundenen Platten mit Ausnehmungen zur Halterung von zwei Behältnissen, wobei die Platten zusammengefaltet wieder in dem Schlitz versenkt werden können. Zur Abstützung weist die Vorrichtung eine schräge Stützplatte auf, deren Breite die minimale Bauhöhe der Vorrichtung vorgibt.

Aus der US-A-4 733 908 ist eine Vorrichtung gemäß dem Oberbegriff des Anspruchs 1 bekannt.

Im Hinblick darauf, daß es bei Kraftfahrzeugen im Bereich der Mittelkonsole erwünscht ist, einerseits ein Ablagefach für verschiedene Utensilien vorzusehen und andererseits auch die Möglichkeit einer Vorrichtung zur Halterung von Behältnissen gegeben sein muß, ist es erforderlich, eine Vorrichtung vorzusehen, die auch bei niedrigen Ablagefächern so verstaut werden kann, daß das Ablagefach noch für andere Zwecke zur Verfügung steht. Dies kann durch die vorstehend diskutierten Vorrichtungen nicht gewährleistet werden.

Der vorliegenden Erfindung liegt daher die Aufgabe zugrunde, eine Vorrichtung zum Halten von Getränkebehältern, Trinkgefäßen oder dergleichen vorzuschlagen, die in einem Ablagefach eines Kraftfahrzeuges integriert ist und platzsparend hinsichtlich Höhe und Dicke der Vorrichtung unterbringbar ist.

Diese Aufgabe wird durch die Vorrichtung mit den Merkmalen des Hauptanspruchs gelöst.

Die Vorrichtung zum Halten von Getränkebechern, Trinkgefäßen oder dergleichen in einem Ablagefach eines Kraftfahrzeuges weist einen zusammenklappbaren Haltering mit einer ersten und einer zweiten Ringhälfte auf. Der Haltering kann aus stabilem Kunststoffmaterial mit entsprechender Wandstärke bestehen und ist im wesentlichen kreisförmig ausgebildet. Die beiden Ringhälften sind über horizontal angeordnete Drehgelenke, beispielsweise mittels eines Zapfens an der einen Ringhälfte und einer entsprechenden Ausnehmung für den Zapfen an der anderen Ringhälfte, miteinander verbunden. Dadurch ist der Haltering zusammenklappbar auf eine Höhe, die dem halben Durchmesser des Halterings entspricht. In der zusammengeklappten Stellung, befinden sich die Ringhälften in einer vertikalen aneinanderliegenden Stellung in dem Ablagefach, wobei die erste Ringhälfte um eine horizontale Achse geschwenkt und die zweite Ringhälfte während eines entsprechenden Schwenkvorgangs auf die erste Ringhälfte zubewegt wird. Dazu sind beiseitig Drehführungen zur Halterung der ersten Ringhälfte bei der Schwenkbewegung aus der vertikalen in die horizontale Stellung und umgekehrt angebracht. Diese können an den Wänden des Ablagefaches oder an einer zusätzlichen Rückwand befestigt sein. Zur Lagerung und Führung der zweiten Ringhälfte befinden sich an den Wänden des Ablagefachs horizontal angeordnete Führungsschienen, in denen die zweite Ringhälfte beim Auseinander- und Zusammenklappen geführt und in ihren Endstellungen gehalten wird.

Der erfindungsgemäß ausgestaltete Haltering dient dazu, das Behältnis seitlich zu fixieren. In vertikaler Richtung steht das Behältnis auf einer Auflagefläche, die sowohl durch den Boden des Ablagefaches als auch durch einen herausklappbaren Boden gebildet werden kann.

Zusätzlich kann die Vorrichtung noch Klemmelemente enthalten, die in Abhängigkeit von dem Durchmesser des Behältnisses in dem Haltering dieses fixiert.

Die derart ausgestaltete Vorrichtung kann in einem niedrigen Ablagefach, das beispielsweise sich in der Mittelkonsole eines Kraftfahrzeuges befindet und daher in der Höhe begrenzt ist, verwendet werden, da durch den zusammengeklappten Haltering eine niedrigere Bauhöhe entsprechend dem halben Durchmesser möglich ist. Nach dem Wegklappen des Halterings steht das Ablagefach für andere Utensilien zur Verfügung.

Weitere vorteilhafte Ausgestaltungen sind den Unteransprüchen zu entnehmen.

Gemäß einer bevorzugten Ausführungsform weist die Vorrichtung ein Klemmteil auf, daß federnd gelagert ist und das Behältnis gegen eine Ringhälfte drückt. Damit wird erreicht, daß eine Vielzahl von Behältnisdurchmessern in der Vorrichtung sicher gehalten werden, ohne daß sie während der Fahrt sich wesentlich hin und her bewegen.

Vorzugsweise ist das Klemmteil unterhalb der ersten Ringhälfte angeordnet, so daß es beim Einführen eines Behältnisses in den Ring entsprechend der Größe des Behältnisses nach unten geklappt wird. Auf der Rückseite des Klemmteils angebrachte Federn drücken das Klemmteil gegen das Behältnis. Zweckmäßigerweise ist die Form des Klemmteils an die kreisförmige Form der Behältnisse etwas angepaßt und ist daher sichelähnlich ausgebildet.

Zur Unterstützung der Klappbewegungen der Ringhälften in den zusammengeklappten bzw. auseinandergeklappten Zustand sind im Bereich des Drehgelenks zwischen den beiden Ringhälften Federelemente vorgesehen, die ein Einschnappen und ein Fixieren der beiden Ringhälften in ihren Endstellungen bewirken. Dies kann durch Schenkelfedern oder auch Zugfedern bewirkt werden. Die Anbringung der Federn erfolgt dabei derart, daß in Abhängigkeit davon, ob der Drehpunkt des Drehgelenks sich oberhalb oder unterhalb der Befestigungspunkte der Federn an den Ringhälften befindet, eine Kraft auf die Ringhälften wirkt, die diese in die eine oder andere Endstellung bewegt. Um von der einen in die andere Endstellung zu gelangen muß der Bediener bis zum Erreichen des Umkehrpunktes eine gegen diese Federkraft wirkende Kraft aufbringen. Die Anbringung der Federn richtet sich danach, ob beim Zusammenklappen der Ringhälften aus der im wesentlichen horizontalen Haltestellung in die senkrechte zusammengeklappte Stellung das Drehgelenk nach oben oder nach unten bewegt wird.

Zusätzlich sind Anschläge vorgesehen, die beim Ausklappen der Ringhälften diese in ihrer Position abstützen. Die Anschläge richten sich danach, ob das Drehgelenk beim Zusammenklappen nach oben oder nach unten geschwenkt wird.

In einer weiteren vorteilhaften Ausgestaltung weisen die Ringhälften sich nach innen erstreckende am Umfang umlaufende Ringflächen auf. Diese befinden sich zweckmäßigerweise am unteren Ende der Wände der Ringhälften, um zusammen mit den Innenwänden der beiden Ringhälften eine Aufnahme für größere auf den Ringflächen stehenden Behältnisse zu bilden. Dabei gewährleistet die Höhe der Innenwände eine feste Halterung des Behältnisses, wie beispielsweise Isolierflaschen, die nicht in die Innenöffnung des Ringes passen und daher auf den Ringflächen aufgesetzt werden können. Die Höhe der Innenwände ist daher ausreichend zu bemessen und liegt etwa in einem Bereich von mindestens 1 bis 1,5 cm. Vorteilhafterweise sind an den Innenwänden noch federnde Spannelemente für das Behältnis angeordnet, die zweckmäßigerweise als federnde Zungen mit einer nach innen vorstehenden Wölbung ausgebildet sind.

Die erfindungsgemäß ausgestaltete Vorrichtung gewährleistet somit eine elegante Lösung für die Unterbringung einer Vielzahl verschiedener Behältnisse bei gleichzeitig niedriger Bauhöhe in einem Ablagefach eines Kraftfahrzeuges. Die Vorrichtung selbst kann kostengünstig als Kunststoffspritzteil hergestellt sein.

Nachfolgend wird die Erfindung anhand von Ausführungsbeispielen näher erläutert.

Es stellen dar:
- Figur 1: in perspektivischer Ansicht eine Vorrichtung zum Halten von Behältnissen, die auf dem Boden eines Ablagefachs abgestellt werden, in der Haltestellung ;
- Figur 2: die Vorrichtung gemäß Figur 1 in eine Zwischenstellung in perspektivischer Ansicht;
- Figur 3: die Vorrichtung gemäß Figur 1 in der zusammengeklappten Stellung in perspektivischer Ansicht;
- Figur 4: das Klemmteil in Draufsicht und Schnitt;
- Figur 5: die Vorrichtung nach Figur 1 in perspektivischer Ansicht aufgeschnitten, so daß die Feder für das Klemmteil sichtbar ist;
- Figur 6: die Innenansichten der ersten und der zweiten Ringhälfte mit Spannelementen;
- Figur 7: eine perspektivische Ansicht der Vorrichtung mit ausklappbarem Boden im ausgeklappten Zustand; und
- Figur 8: die Vorrichtung gemäß Figur 7 in perspektivischer Ansicht in zusammgeklapptem Zustand.

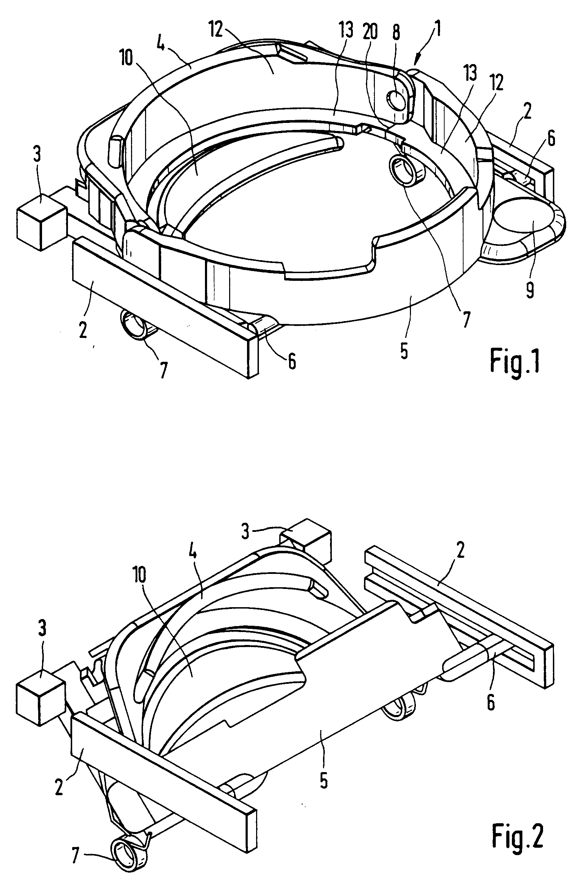

Figur 1 zeigt den Haltering 1 in seiner ausgeklappten Stellung zur Aufnahme eines nicht dargestellten Behältnisses. Ebenfalls nicht dargestellt ist aus Veranschaulichungsgründen das Ablagefach mit den Seitenwänden an denen die Führungsschienen 2 und die Drehführungen 3 befestigt sind. In der Drehführung 3 ist die erste Ringhälfte 4 gelagert. Die zweite Ringhälfte 5 ist über Drehzapfen 6 in den Führungsschienen 2 gelagert, so daß die zweite Ringhälfte 5 in die Führungsschienen 2 in Längsrichtung bewegt und gleichzeitig in die vertikale Stellung geschwenkt werden kann. Im vorliegenden Ausführungsbeispiel werden die Ringhälften 4, 5 wie aus Figur 2 ersichtlich nach unten geschwenkt. Die beiden Ringhälften 4, 5 sind über die Drehgelenke 8 verbunden und werden über Schenkelfedern 7 in ihren beiden Endstellungen gehalten. Die Schenkelfeder 7 übt in dem Augenblick, in dem die Drehachse des Drehgelenks 8 oberhalb des Angriffspunktes der Schenkelfedern 7 an den Ringhälften 4, 5 gelangt, eine Kraft aus, die die Ringhälften in ihre Haltestellung drückt. Als Anschlag dienen die beiden Stirnflächen der aneinanderstoßenden Ringhälften. Zur optimalen Betätigung weist die Vorrichtung noch eine Betätigungstaste 9 auf.

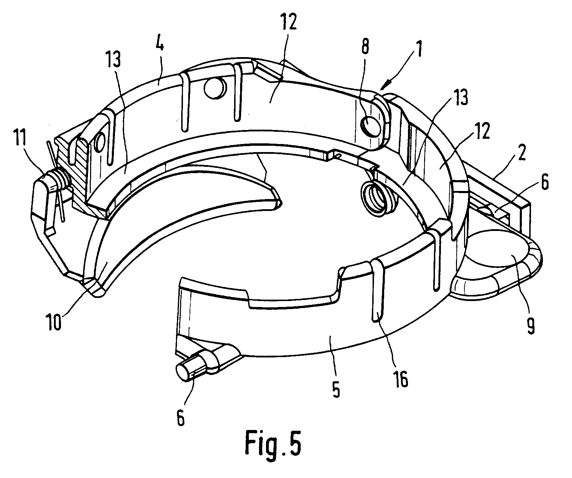

Unterhalb der ersten Ringhälfte 4 befindet sich ein Klemmteil 10, das mittels einer oder mehreren Federn 11 (Figur 5) in der in Figur 1 dargestellten Position gehalten wird. Beim Einführen eines Behältnisses in den Haltering 1 wird das Klemmteil 10 entsprechend dem Durchmesser des Behältnisses nach unten bewegt, so daß durch das Klemmteil 10 das Behältnis gegen die gegenüberliegende Wand des Halterings 5 gedrückt wird und damit fixiert ist. Dadurch können Behältnisse mit verschiedenen Durchmessern sicher in dem Haltering 1 gehalten werden.

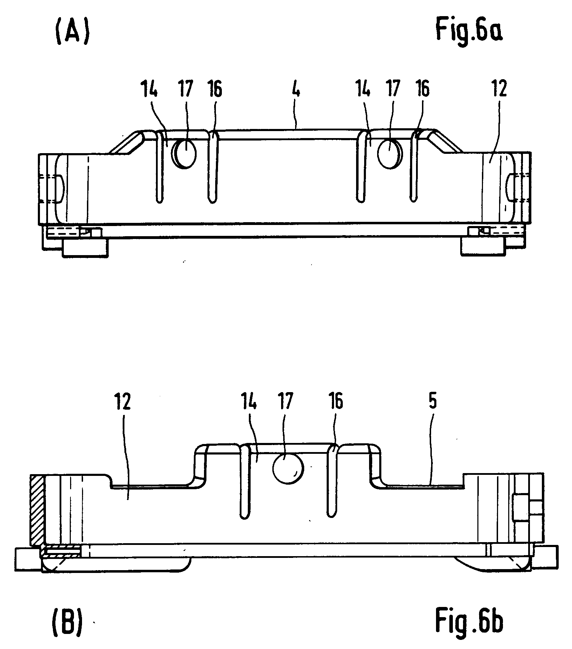

Die beiden Ringhälften 4, 5 weisen eine Ringwand 12 auf, an deren unteren Ende sich eine Ringfläche 13 nach innen erstreckt. Diese Ringfläche 13 dient dazu, größere Behältnisse wie beispielsweise eine Isolierkanne aufzunehmen. Diese wird seitlich durch die Ringwand 12, die eine Mindesthöhe von 1 bis 1,5 cm aufweist sicher gehalten. Zusätzlich können dazu an der Ringwand 12 Spannelemente 14 (Figur 6) vorgesehen sein, die einen Toleranzausgleich bewirken.

Figur 2 zeigt eine Zwischenstellung, in der die beiden Ringhälften 4, 5 nach unten geschwenkt und die zweite Ringhälfte 5 mit den Drehzapfen 6 in den Führungsschienen 2 sich in Richtung der ersten Ringhälfte 4 bewegt hat.

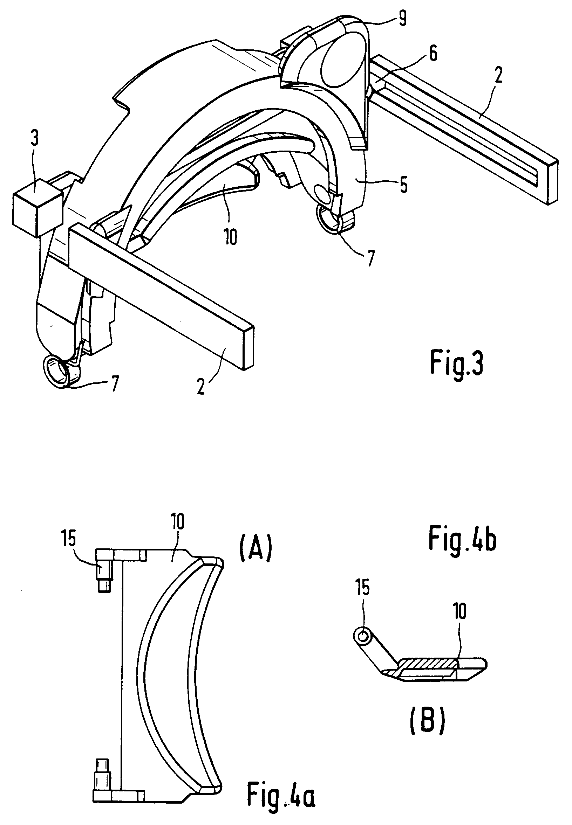

Figur 3 zeigt die Vorrichtung in der zusammengeklappten Stellung und die zweite Ringhälfte 5 hat ihre Endstellung am anderen Ende der Führungsschiene 2 eingenommen, wobei die beiden Ringhälften in dieser Stellung durch die Schenkelfedern 7 gehalten werden. In dem Augenblick, in dem der Drehpunkt des Drehgelenks unterhalb dem Angriffspunkt der Schenkelfedern 7 an den Ringhälften gelangt, üben die Schenkelfedern 7 eine Kraft aus, die die beiden Ringhälften in ihre zusammengeklappte Endstellung bringt und hält. Die Höhe der gesamten Vorrichtung entspricht im wesentlichen dem halben Durchmesser des auseinandergeklappten Ringes.

Figur 4a zeigt das Klemmteil 10, das sichelförmig ausgebildet ist, um eine möglichst große Angriffsfläche an die verschiedenen Durchmesser der Behältnisse zu gewährleisten. Die Zapfen 15 greifen in die in den vorangegangenen Figuren dargestellte Drehführung 3 ein. Figur 4b zeigt das Klemmteil 10 im Schnitt.

In Figur 5 ist die in Figur 1 beschriebene Vorrichtung mit auseinandergeklappten Haltering 1 dargestellt, wobei die vordere Führungsschiene weggelassen und die beiden Ringhälften 4 und 5 aufgeschnitten sind, um die Anbringung des Klemmteils 10 mit der Feder 11 zu zeigen. Die Feder 11 stützt sich an einer zusätzlichen Wand der Vorrichtung oder der Rückwand des Ablagefaches (beides nicht dargestellt) ab, um das Klemmteil 10 gegen Behältnisse in dem Haltering 1 zu drücken.

In Figur 6 sind die Spannelemente 14 dargestellt, die in dem Ausführungsbeispiel durch Einschnitte 16 in der Ringwand 12 gebildet werden, so daß in diesem Bereich die Ringwand 12 elastisch ist. Zusätzlich sind in diesem Bereich nach innen vorstehende Wölbungen 17 angebracht, die die Wandstärke vergrößern und damit eine Anpreßkraft der federnden Ringwandbereiche bewirken. Figur 6a zeigt die erste Ringhälfte 4 und Figur 6b die zweite Ringhälfte 5.

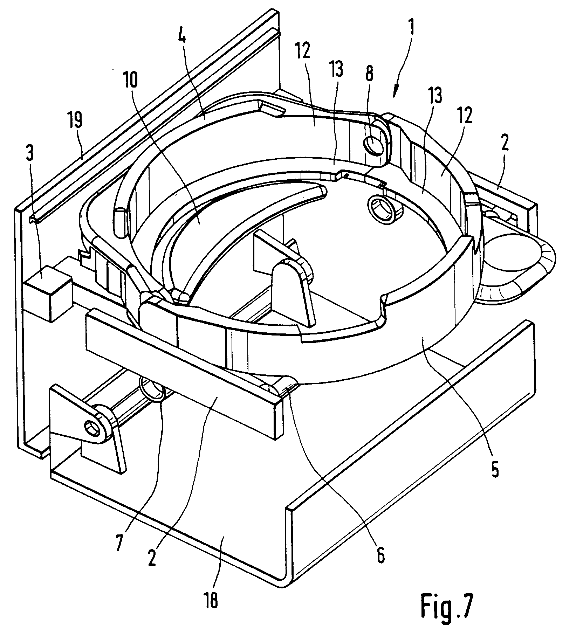

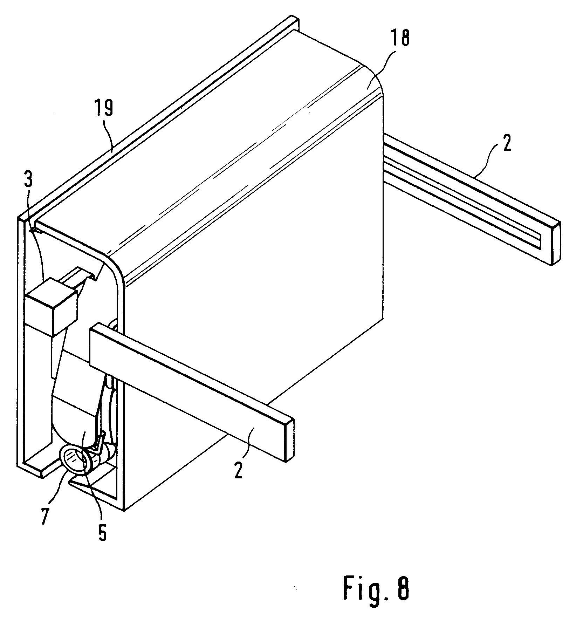

Figur 7 zeigt ein anderes Ausführungsbeispiel, das sich von dem vorstehend beschriebenen Ausführungsbeispiel dadurch unterscheidet, daß zusätzlich ein Boden 18 herausgeklappt wird, der im zusammengeklappten Zustand (Figur 8) als Abdeckung dient. Der Boden 18 ist schwenkbar an einer Rückwand 19 gelagert, die in dem Ablagefach angebracht wird. Im übrigen ist die Funktionsweise der Vorrichtung und der vorstehend beschriebenen Elemente gleich, wobei auch hier die Führungsschienen 2 an der Seitenwand des Ablagefachs befestigt ist. Die Drehführungen 3 sind an der Rückwand 19 befestigt. Eine derartige Vorrichtung ist für Ablagefächer geeignet, die eine größere Bauhöhe haben, so daß deren Boden nicht als Auflagefläche für Behältnisse, wie insbesondere Trinkbecher oder Getränkedosen, geeignet ist.

## Patentansprüche

1. Vorrichtung zum Halten von Getränkebehältern, Trinkgefäßen oder dergleichen in einem Ablagefach eines Kraftfahrzeuges, wobei das Behältnis auf einer Auflagefläche steht und ein Haltering das Behältnis seitlich fixiert**,** und mit einem
zusammenklappbaren Haltering (1), der eine erste (4) und eine zweite (5) Ringhälfte aufweist, die über horizontal angeordnete Drehgelenke (8) miteinander verbunden und aus einer vertikalen zusammengeklappten Stellung in eine horizontal, den Haltering vervollständigenden Haltestellung bewegbar sind, **gekennzeichnet durch** beidseitig angeordnete Drehführungen (3) zur Halterung der ersten Ringhälfte (4) bei der Schwenkbewegung aus der vertikalen in die horizontale Stellung und umgekehrt, und
beidseitig an den Wänden des Ablagefachs horizontal angeordnete Führungsschienen (2), in denen die zweite Ringhälfte (5) gelagert und beim Auseinander-und Zusammenklappen geführt ist.

2. Vorrichtung nach Anspruch 1, **gekennzeichnet durch**, ein Klemmteil (10), das federnd gelagert ist und das Behältnis gegen eine Ringhälfte (5) drückt.

3. Vorrichtung nach Anspruch 2, **dadurch gekennzeichnet**, daß das Klemmteil (10) unterhalb der ersten Ringhälfte (4) angeordnet ist, so daß es beim Einführen eines Behältnisses in den Haltering (1) entsprechend der Größe des Behältnisses nach unten geklappt wird.

4. Vorrichtung nach Anspruch 2 oder 3, **dadurch gekennzeichnet**, daß das Klemmteil (10) eine sichelähnliche Form aufweist.

5. Vorrichtung nach einem der vorangegangenen Ansprüche, **dadurch gekennzeichnet**, daß im Bereich des Drehgelenks (8) zwischen den beiden Ringhälften (4, 5) Federelemente (7) vorgesehen sind, die ein Einschnappen und Fixieren der beiden Ringhälften (4, 5) in ihren Endstellungen bewirken.

6. Vorrichtung nach Anspruch 5, **dadurch gekennzeichnet**, daß Anschläge (20) für die Ringhälften (4, 5) in der ausgeklappten Haltestellung vorgesehen sind.

7. Vorrichtung nach einem der vorangegangenen Ansprüche, **dadurch gekennzeichnet**, daß die Ringhälften (4, 5) sich nach innen erstreckende am Umfang umlaufende Ringflächen (13) aufweisen, die zusammen mit den Innenwänden (12) der beiden Ringhälften eine Aufnahme für größere auf den Ringflächen (13) stehende Behältnisse bilden, wobei die Höhe der Innenwände (12) eine feste seitliche Halterung des Behältnisses gewährleistet.

8. Vorrichtung nach Anspruch 7, **dadurch gekennzeichnet**, daß an den Innenwänden (12) federnde Spannelemente (14) für das Behältnis angeordnet sind.

9. Vorrichtung nach Anspruch 8, **dadurch gekennzeichnet**, daß die Spannelemente als federnde Zungen mit einer nach innen vorstehenden Wölbung (17) ausgebildet sind.

10. Vorrichtung nach einem der vorangegangenen Ansprüche, **dadurch gekennzeichnet**, daß an der Vorrichtung unterhalb des Halterings (1) ein schwenkbar gelagerter und in horizontaler Stellung gegen die Rückwand (19) abstützbarer Boden (18) angeordnet ist, der in eine vertikale Stellung als Abdeckung der Vorrichtung hochklappbar ist.

## Claims

1. Device for holding drinks containers, drinking vessels or the like in a storage compartment of a motor vehicle, wherein the container rests on a supporting surface and a supporting ring fixes the container laterally, which device has a collapsible supporting ring (1) having a first (4) and a second (5) ring half which are coupled to each other by means of horizontally arranged hinges (8) and are movable from a vertical collapsed position to a horizontal supporting position in which the supporting ring is completed, characterised by
pivot guides (3) arranged on both sides to secure the first ring half (4) during the swivelling movement from the vertical to the horizontal position and vice versa, and
guide rails (2) arranged horizontally on both sides on the walls of the storage compartment, in which guide rails the second ring half (5) is mounted and guided while being folded out and up.

2. Device according to claim 1, characterised by a clamping element (10) which is spring-mounted and presses the container against one ring half (5).

3. Device according to claim 2, characterised in that the clamping element (10) is arranged below the first ring half (4) so that on introduction of a container into the supporting ring (1) the clamping element is pushed downwards in accordance with the size of the container.

4. Device according to claim 2 or 3, characterised in that the clamping element (10) is of sickle-like form.

5. Device according to one of the preceding claims, characterised in that in the region of the hinge (8) between the two ring halves (4, 5) there are provided spring elements (7) which snap the two ring halves (4, 5) into their end positions and fix them in those positions.

6. Device according to claim 5, characterised in that there are provided stop means (20) for the ring halves (4, 5) in their folded-out supporting position.

7. Device according to one of the preceding claims, characterised in that there are arranged around the circumference of the ring halves (4, 5) inwardly-projecting annular surfaces (13) that together with the inner walls (12) of the two ring halves form a seat for larger containers resting on the annular surfaces (13), the height of the inner walls (12) ensuring that the container is firmly secured laterally.

8. Device according to claim 7, characterised in that on the inner walls (12) there are arranged resilient gripping elements (14) for the container.

9. Device according to claim 8, characterised in that the gripping elements are formed as resilient tongues having an inwardly-projecting enlargement (17).

10. Device according to one of the preceding claims, characterised in that on the device below the supporting ring (1) there is arranged a swivellably mounted base (18) that can bear against the rear wall (19) in the horizontal position and can be folded up into a vertical position as a cover for the device.

## Revendications

1. Dispositif pour maintenir des récipients de boissons, des verres ou des récipients pour boire, ou des objets analogues dans un vide-poche d'un véhicule automobile, le récipient reposant sur une surface d'appui et un anneau de retenue fixant latéralement le récipient, et le dispositif comprenant un anneau (1) de retenue rabattable, présentant une première moitié (4) et une seconde moitié (5) d'anneau reliées à l'aide de liaisons articulées (8) disposées horizontalement et mobiles pour passer d'une position verticale de rabattement et de regroupement à une position horizontale de maintien complétant l'anneau de retenue, dispositif caractérisé en ce qu'il comporte des organes de guidage en rotation (3), disposés des deux côtés pour maintenir la première moitié (4) d'anneau lors de son mouvement de pivotement pour passer de la position verticale à la position horizontale et inversement, et en ce qu'il comporte des deux côtés, sur les parois du vide-poche,des rails (2) de guidage, disposés horizontalement, dans lesquels la seconde moitié (5) d'anneau est montée et est guidée lors des mouvements de déploiement et de rabattage.

2. Dispositif selon la revendication 1, caractérisé en ce qu'il comporte une pièce de serrage (10), qui est montée élastiquement et qui pousse le récipient contre la moitié (5) d'anneau.

3. Dispositif selon la revendication 2, caractérisé en ce que la pièce de serrage (10) est disposée sous la première moitié (4) d'anneau, de sorte que, quand on introduit un récipient dans l'anneau (1) de retenue, on fait basculer vers le bas cette pièce d'une façon correspondant à la grandeur ou taille du récipient.

4. Dispositif selon la revendication 2 ou 3, caractérisé en ce que la pièce de serrage (10) présente une forme analogue à celle d'un croissant.

5. Dispositif selon l'une des revendications précédentes, caractérisé en ce que, dans la zone de l'articulation (8) entre les deux moitiés (4, 5) d'anneau, sont prévus des éléments élastiques (7) qui ont pour rôle d'encliqueter et de fixer dans leurs positions terminales les deux moitiés (4, 5) d'anneau.

6. Dispositif selon la revendication 5, caractérisé en ce que des butées (20) sont prévues pour des moitiés (4, 5) d'anneau dans la position des moitiés déployées pour le maintien.

7. Dispositif selon l'une des revendications précédentes, caractérisé en ce que les moitiés (4, 5) d'anneau présentent des surfaces annulaires (13) continues se déployant vers l'intérieur à la périphérie de l'anneau, qui forment avec les parois intérieures (12) des deux moitiés d'anneau un logement pour des récipients assez grands placés sur des surfaces annulaires (13), la hauteur des parois intérieures (12) permettant ainsi un maintien latéral ferme du récipient.

8. Dispositif selon la revendication 7, caractérisé en ce que des éléments élastiques (14) sont disposés sur les parois intérieures (12) pour coincer le récipient.

9. Dispositif selon la revendication 8, caractérisé en ce que les éléments de calage et de coincement sont conformés en des languettes élastiques présentant un bombement (17) faisant saillie vers l'intérieur.

10. Dispositif selon l'une des revendications précédentes, caractérisé en ce qu'un fond (18), monté basculable et pouvant en position horizontale s'appuyer contre la paroi arrière (19), est monté sur le dispositif, au-dessous de l'anneau (1) de retenue, ce fond pouvant être rabattu vers le haut en position verticale pour servir de couvercle de protection du dispositif.
